# EUROPÄISCHE PATENTSCHRIFT

(11) **EP 1 128 945 B1**
(45) Veröffentlichungstag und Bekanntmachung des Hinweises auf die Patenterteilung: **18.12.2002**
(21) Anmeldenummer: 99950748.6
(22) Anmeldetag: 15.10.1999
(51) Int. Cl.: B29C 44/12

(54) **VERFAHREN ZUM HERSTELLEN EINES SCHAUMKÖRPERTEILES, INSBESONDERE EINES POLSTERSCHAUMTEILES FÜR EINEN FLUG- ODER FAHRGASTSITZ**
METHOD FOR PRODUCING A FOAM ELEMENT, ESPECIALLY A FOAM PADDING ELEMENT FOR A CAR OR PLANE PASSENGER SEAT
PROCEDE POUR PRODUIRE UN ELEMENT EN MOUSSE, NOTAMMENT UN ELEMENT DE REMBOURRAGE EN MOUSSE POUR UN SIEGE D'AUTOMOBILE OU D'AVION

(30) Priorität: 13.11.1998 DE 19852433
(43) Veröffentlichungstag der Anmeldung: 05.09.2001
(73) Patentinhaber: GOTTLIEB BINDER GMBH & Co., 71084 Holzgerlingen (DE)
(72) Erfinder: TUMA, Jan, D-12681 Berlin (DE)
(74) Vertreter: Patentanwälte Bartels und Partner
(86) Internationale Anmeldenummer: EP9907841
(87) Internationale Veröffentlichungsnummer: WO00029190

(56) Entgegenhaltungen:
- EP-A- 0 002 311
- US-A- 5 688 576

## Beschreibung

Die Erfindung bezieht sich auf ein Verfahren zum Herstellen eines Schaumkörperteiles, insbesondere eines Polsterschaumteiles für einen Flug- oder Fahrgastsitz, bei welchem Verfahren im Schaumkörperteil zumindest eine Ausnehmung, die sich zu dessen Oberfläche hin öffnet und zur Aufnahme eines Verankerungsteiles für ein Bezugsmaterial vorgesehen ist, ausgebildet wird, indem in einer den Schaumkörperteil formenden Einschäumform zumindest ein entfernbares Formteil angeordnet wird, das Formflächen aufweist, die in der Ausnehmung im Abstand von der Oberfläche des Schaumkörperteiles eine Erweiterung bilden.

Die in einem solchen, allgemein bekannten Verfahren ausgebildete innere Erweiterung der Ausnehmung des Schaumkörperteiles ermöglicht eine gute Verankerung von in der Erweiterung sitzenden Verankerungsteilen, so daß eine sichere Befestigung von Bezugsmaterialien ermöglicht wird. Bei der Durchführung üblicher Verfahren zur Herstellung von Schaumkörperteilen mit Ausnehmungen, in denen Verankerungsteile aufzunehmen sind, treten jedoch Probleme auf. Ein Herausnehmen des Verankerungsteiles aus der Ausnehmung im Schaumkörperteil, wie es beim Anbringen der Bezugsmaterialien bei der Sitzherstellung vielfach erforderlich ist, gestaltet sich insbesondere dann schwierig, wenn die Ausnehmung eine die Verankerungswirkung begünstigende Querschnittsform besitzt. Solche Querschnittsformen ermöglichen den Austritt des betreffenden Verankerungsteiles nur unter einem hohen Kraftaufwand, was zur Beschädigung des Schaumkörperteiles durch Bruch oder Riß führen kann.

Der Erfindung liegt die Aufgabe zugrunde, ein Verfahren aufzuzeigen, das eine problemlose Herstellung eines Schaumkörperteiles mit einer im Hinblick auf eine gute Verankerungswirkung ausgelegten Ausnehmung ermöglicht.

Bei einem Verfahren der eingangs genannten Art ist diese Aufgabe erfindungsgemäß dadurch gelöst, daß als Verankerungsteil ein einen näherungsweise T-förmigen Querschnitt aufweisender Profilkörper verwendet wird, dessen Fußteil den zur Erweiterung führenden Teil der Ausnehmung im Schaumkörperteil durchgreift, daß der Querbalken der T-Form in die Erweiterung der Ausnehmung eingreift und daß eine solche T-Form verwendet wird, bei der die Unterseite des in zumindest einem ihrer an den Fußteil angrenzenden Abschnitte mit diesem einen stumpfen Winkel α bildet.

Dadurch, daß ein Verankerungsteil verwendet wird, bei dem sich auf zumindest einer Seite eine leicht geneigte Schrägfläche im Übergangsbereich zwischen Mündungskanal und Erweiterung der Ausnehmung des Schaumkörperteils befindet, wird das Herausnehmen des Verankerungsteiles, das unter Aufspreizen der Ausnehmung erfolgt, erleichtert. Trotz der leichten Abschrägung am Übergang zwischen Querbalken und Fußteil der T-Form bleibt die gute Verankerungswirkung jedoch erhalten.

Wird beim Einschäumvorgang zur Herstellung des Schaumkörperteiles für die Bildung der Ausnehmung ein im Querschnitt T-förmiges Formteil benutzt, dessen Formflächen in betreffenden Wandteilen einen entsprechend schrägen Verlauf besitzen, wie dies bei dem bei der Erfindung verwendeten Verankerungsteil der Fall ist, so ergibt sich der zusätzliche Vorteil, daß beim Einschäumvorgang die Gefahr einer Lunkerbildung durch unter dem Querbalken der T-Form des Formteiles eingefangene Schaumblasen vermieden ist. Dadurch ergibt sich eine einwandfreie Struktur des Schaumkörperteiles.

Vorzugsweise wird als Verankerungsteil ein Profilkörper verwendet, bei dem der Fußteil die Form eines leistenartigen Flachprofiles hat, an dem das betreffende Bezugsmaterial beispielsweise durch Verkleben oder Verschweißen befestigt ist.

Die T-Form des als Verankerungsteil verwendeten Profilkörpers kann je nach Anforderungen abgewandelt sein. Beispielsweise brauchen nicht beide an den Fußteil angrenzenden Unterseiten des Querbalkens unter Bildung des stumpfen Winkels α schräg zum Fußteil verlaufen, vielmehr kann dieser einen zur Haupterstreckung des Querbalkens schrägen Verlauf besitzen, so daß nur auf einer Seite des Fußteiles mit der Unterseite des Querbalkens ein stumpfer Winkel gebildet wird.

Der Querbalken der T-Form kann unsymmetrisch oder an der Oberseite gewölbt ausgebildet sein. Derartige Formgebungen erhöhen die Torsionsfestigkeit der Verankerung.

Die das betreffende Verankerungsteil aufnehmende Ausnehmung im Schaumkörperteil kann der jeweiligen Querschnittsform des Verankerungsteiles genau angepaßt sein oder so ausgebildet sein, daß die Erweiterung der Ausnehmung eine größere Tiefe, verglichen mit der Dicke des Querbalkens des Verankerungsteiles, aufweist. Bei solcher Ausbildung der Ausnehmung ergibt sich der Vorteil, daß Verankerungsteile unterschiedlicher Formgebung zur Anwendung gebracht werden können, was eine besonders rationelle Herstellung der betreffenden Schaumkörperteile ermöglicht.

Nachstehend ist die Erfindung anhand der Zeichnung im einzelnen erläutert. Es zeigen:
- Fig. 1: eine vergrößert gezeichnete perspektivische Ansicht eines Verankerungsteiles, das für die Durchführung des erfindungsgemäßen Verfahrens verwendbar ist, und
- Fig. 2 bis 9: mit jeweils abgebrochenem Fußteil gezeichnete Querschnitte weiterer Beispiele von Verankerungsteilen für die Durchführung des erfindungsgemäßen Verfahrens.

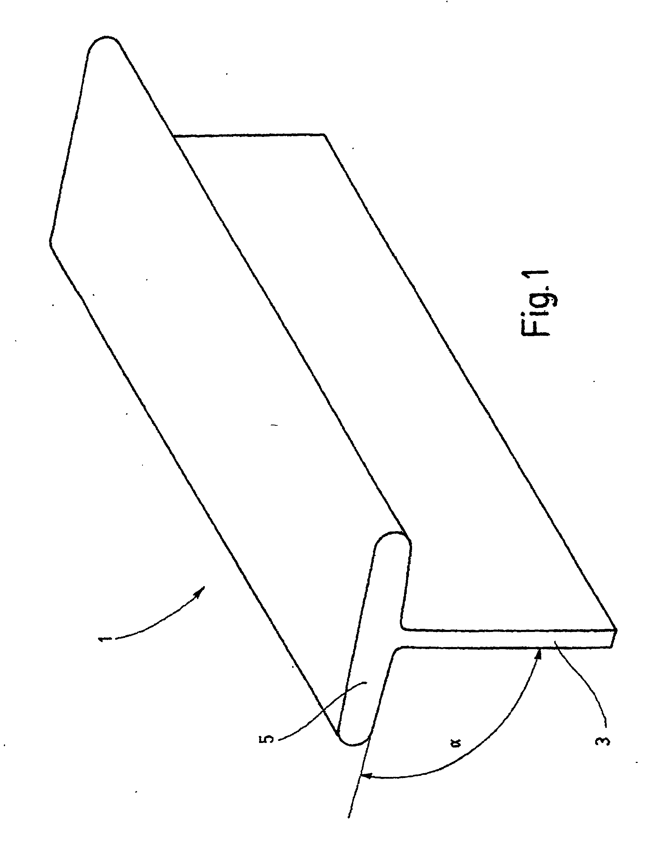

Fig. 1 zeigt ein als Ganzes mit 1 bezeichnetes Verankerungsteil, das in einer nicht dargestellten Ausnehmung eines betreffenden Schaumkörperteiles, beispielsweise eines Polsterschaumteiles, verankerbar ist. Das Verankerungsteil 1 ist ein Profilkörper, vorzugsweise aus thermoplastischem Werkstoff, der eine der T-Form angenäherte Querschnittsform mit einem leistenartigen Fußteil 3 und einem kopfseitigen Querbalken 5 besitzt. Das Verankerungsteil 1 ist in der im Schaumkörperteil gebildete Ausnehmung so aufnehmbar, daß sich der Fußteil 3 durch einen schmalen, an der Oberfläche des Schaumkörperteiles mündenden Kanal erstreckt, der an seinem inneren Endbereich in eine den Querbalken 5 aufnehmende Erweiterung übergeht. Der vom Fußteil 3 durchgriffene Kanal der Ausnehmung im Schaumkörperteil kann der Dicke des Fußteiles angepaßt sein oder demgegenüber eine etwas größere lichte Weite besitzen.

Bei dem Verankerungsteil 1 erfolgt der Übergang zwischen dem Querbalken 5 und dem Fußteil 3 nicht über eine scharfe, rechtwinklige Kante, sondem über eine durch die Unterseite des Querbalkens 5 gebildete, leicht schräg zum Fußteil 3 verlaufende geneigte Fläche, die mit dem Fußteil 3 außenseitig einen stumpfen Winkel α von mehr als 90° einschließt. Der Winkel α liegt näherungsweise im Bereich von etwa 93° bis 100°, vorzugsweise bei etwa 95°. Außerdem ist der Übergang zwischen Fußteil 3 und Querbalken 5 abgerundet. Aufgrund dieser Formgebung läßt sich das Verankerungsteil 1 unter mäßigem Aufspreizen des vom Fußteil 3 durchgriffenen Kanals ohne Schwierigkeiten herausziehen. Trotz der den Entnahmevorgang begünstigenden Formgebung stellt der Querbalken 5 des Verankerungsteiles 1 eine sehr gute Verankerungswirkung sicher.

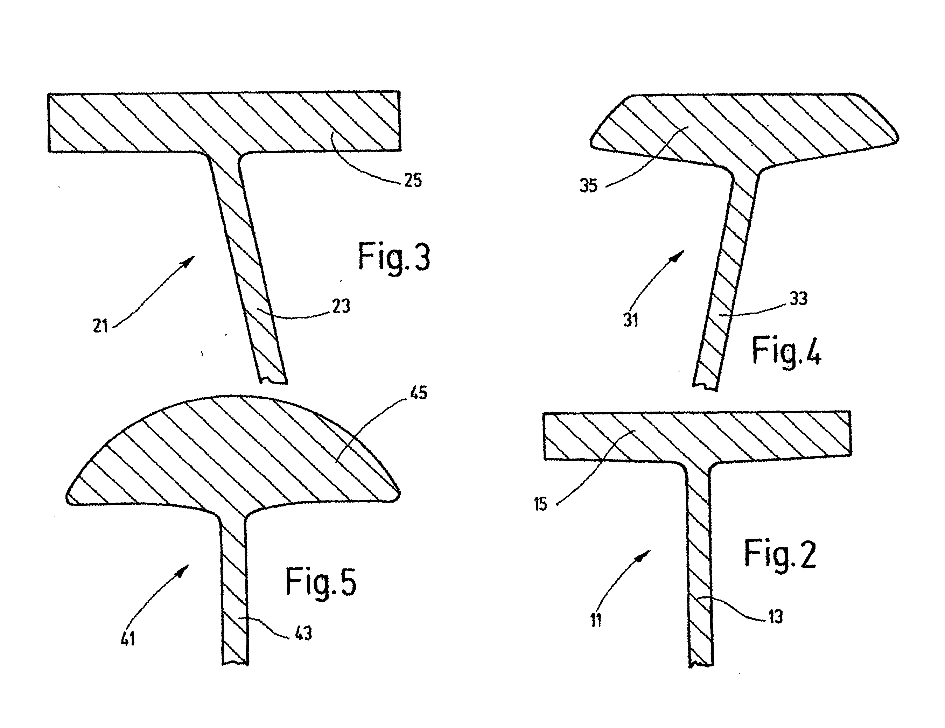

Die Fig. 2 bis 9 zeigen einige ausgewählte Beispiele aus der Vielzahl möglicher Querschnittsformen von Profilkörpern, die als Verankerungsteile für die Durchführung des erfindungsgemäßen Verfahrens verwendbar sind. In den Fig. 2 bis 9 sind Teile, die solchen von Fig. 1 entsprechen, mit Bezugszahlen versehen, die gegenüber Fig. 1, von Figur zu Figur jeweils um 10 fortschreitend, erhöht sind. So zeigt Fig. 2 eine der Fig. 1 ähnliche T-Form des Profilkörpers 11, bei der im Unterschied zum Profilkörper 1 die Außenseiten des Querbalkens 15 nicht abgerundet sind. Diese Formgebung erhöht die Verankerungswirkung für das in das Schaumkörperteil eingesetzte Verankerungsteil, wobei die beidseitigen, stumpfwinkligen und abgerundeten Übergänge zwischen Fußteil 13 und Querbalken 15 ein störungsfreies Herausnehmen des Profilkörpers 11 ermöglichen.

Fig. 3 zeigt eine Formgebung des Profilkörpers 21, die sich gegenüber Fig. 3 dadurch unterscheidet, daß der Fußteil 23 zur Haupterstreckung des Querbalkens 25 nicht senkrecht, sondern schief verlaufend angeordnet ist, wobei lediglich auf einer Seite ein stumpfer Winkel zwischen Fußteil 23 und Querbalken 25 gebildet ist. Dieser Profilkörper zeichnet sich dadurch aus, daß er im Schaumkörperteil besonders sicher gegen Torsion gesichert ist, wodurch die Gefahr vermieden ist, daß bei der Benutzung, wenn das Schaumkörperteil beispielsweise als Sitzpolsterung fungiert, ein Herausdrehen des Verankerungsteiles durch die wechselnden Sitzbelastungen durch den Sitzbenutzer erfolgt.

Bei dem in Fig. 4 gezeigten Profilkörper 31 ist der Fußteil 33, ähnlich wie bei Fig. 3, gegenüber dem Querbalken 35 schräg verlaufend, während der Querbalken 35 unsymmetrisch, mit geschwungenen Endrändern, ausgebildet ist. Diese Formgebung zeichnet sich ebenfalls durch eine torsionsfeste Verankerungswirkung aus.

Fig. 5 zeigt einen Profilkörper 41 mit an der Oberseite kreisbogenförmig abgerundetem Querbalken 45 und leicht gekrümmten Unterseiten des Querbalkens 45 zu beiden Seiten des Fußteiles 43. Auch hierbei ergibt sich eine hohe Torsionssicherheit.

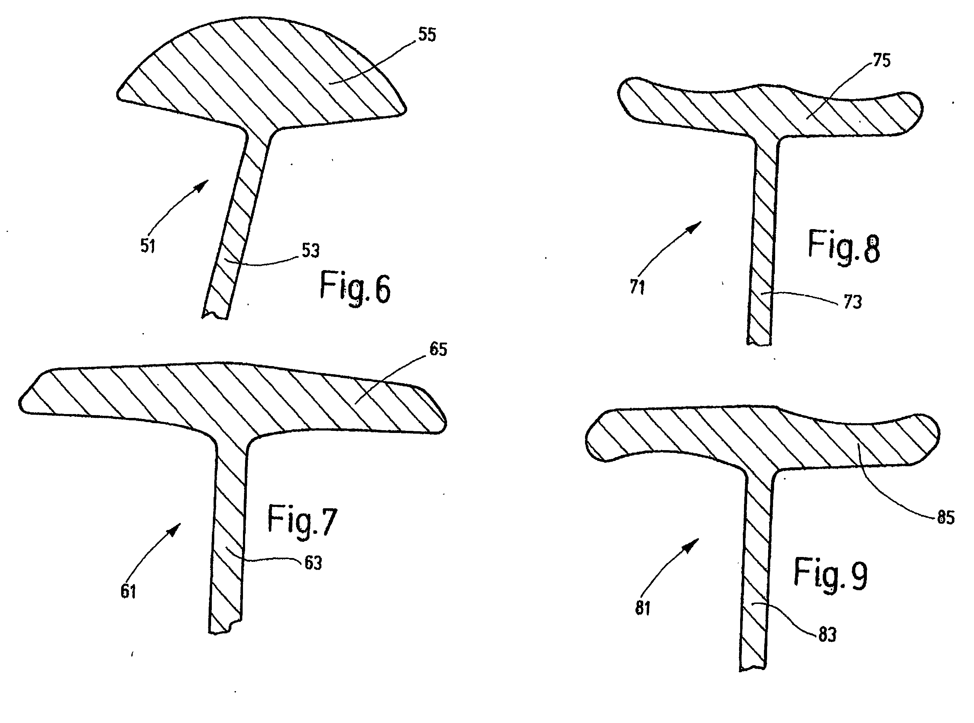

Bei dem Beispiel von Fig. 6 sind die an den Fußteil 43 angrenzenden Unterseiten des Querbalkens 55, im Unterschied zu Fig. 5, nicht geschwungen, jedoch ist der Fußteil 53 relativ zum Querbalken 55 schräg stehend, wodurch sich auch bei diesem Ausführungsbeispiel eine besonders gute Torsionssicherheit der Verankerung bietet.

Fig. 7 bis 9 zeigen weitere Beispiele für Profilkörper 61, 71 bzw. 81 mit jeweils senkrecht stehenden Fußteilen 63, 73 bzw. 83, wobei jedoch die Querbalken 65, 75 bzw. 85 unregelmäßige Formgebungen aufweisen.

Bei sämtlichen dieser Konfigurationen erfolgt der Übergang zwischen Querbalken und Fußteil auf zumindest einer Seite desselben unter Bildung eines stumpfen Winkels von mehr als 90°, wobei die Übergangsstellen jeweils abgerundet, d.h. nicht scharfkantig sind, so daß ein störungsfreies Herausnehmen des betreffenden Profilkörpers aus dem Schaumkörperteil erfolgen kann.

## Patentansprüche

1. Verfahren zum Herstellen eines Schaumkörperteiles, insbesondere eines Polsterschaumteiles für einen Flug- oder Fahrgastsitz, bei welchem Verfahren im Schaumkörperteil zumindest eine Ausnehmung, die sich zu dessen Oberfläche hin öffnet und zur Aufnahme eines Verankerungsteiles für ein Bezugsmaterial vorgesehen ist, ausgebildet wird, indem in einer den Schaumkörperteil formenden Einschäumform zumindest ein entfernbares Formteil angeordnet wird, das Formflächen aufweist, die in der Ausnehmung im Abstand von der Oberfläche des Schaumkörperteiles eine Erweiterung bilden, **dadurch gekennzeichnet, daß** als Verankerungsteil ein einen näherungsweise T-förmigen Querschnitt aufweisender Profilkörper (1; 11; 21; 31; 41; 51; 61; 71; 81) verwendet wird, dessen Fußteil (3; 13; 23; 33; 43; 53; 63; 73; 83) den zur Erweiterung führenden Teil der Ausnehmung im Schaumkörperteil durchgreift, daß der Querbalken (5; 15; 25; 35; 45; 55; 65; 75; 85) der T-Form in die Erweiterung der Ausnehmung eingreift und daß eine solche T-Form verwendet wird, bei der die Unterseite des Querbalkens (5; 15; 25; 35; 45; 55; 65; 75; 85) in zumindest einem ihrer an den Fußteil (3; 13; 23; 33; 43; 53; 63; 73; 83) angrenzenden Abschnitte mit diesem einen stumpfen Winkel α bildet.

2. Verfahren nach Anspruch 1, **dadurch gekennzeichnet, daß** als Verankerungsteil ein Profilkörper mit einem als Flachprofil ausgebildeten Fußteil (3; 13; 23; 33; 43; 53; 63; 73; 83) verwendet wird.

3. Verfahren nach Anspruch 1 oder 2, **dadurch gekennzeichnet, daß** als Verankerungsteil ein Profilkörper (1) verwendet wird, bei dem der Querbalken (5) der T-Form als Flachprofil ausgebildet ist, bei dem beide an den Fußteil (3) angrenzenden Unterseiten des Querbalkens leicht schräg zum Fußteil (3) verlaufen und beidseits mit diesem den stumpfen Winkel α bilden.

4. Verfahren nach Anspruch 3, **dadurch gekennzeichnet, daß** ein Profilkörper verwendet wird, bei dem der Querbalken (5; 65; 75; 85) der T-Form endseitig abgerundet ist.

5. Verfahren nach Anspruch 3 oder 4, **dadurch gekennzeichnet, daß** ein Profilkörper verwendet wird, bei dem der Fußteil (23; 33; 53) zur Haupterstreckung des Querbalkens schief verlaufend angeordnet ist, so daß lediglich auf einer Seite der stumpfe Winkel α zwischen Fußteil (23; 33; 53) und Unterseite des Querbalkens (25; 35; 55) gebildet wird.

6. Verfahren nach einem der Ansprüche 1 bis 5, **dadurch gekennzeichnet, daß** ein Profilkörper (31) verwendet wird, bei dem der Querbalken (35) unsymmetrisch, mit geschwungenen Endrändern ausgebildet ist.

7. Verfahren nach einem der Ansprüche 1 bis 6, **dadurch gekennzeichnet, daß** ein Profilkörper (41) verwendet wird, bei dem die Oberseite des Querbalkens (45) des T-Profiles kreisbogenförmig abgerundet ist und die Unterseiten des Querbalkens (45) zu beiden Seiten des Fußteiles (43) leicht gekrümmt sind.

## Claims

1. Method for producing a foam element, especially a foam padding element for a car or plane passenger seat, by which method at least one recess opening to the surface, designed for housing an anchor element for upholstery cloth, is formed by at least one removable moulded body being placed in a foaming mould for shaping the foam element, the said moulded body having formed faces which form an enlargement in the recess at a distance from the surface of the foam element, **characterised in that** a profiled body with an approximately T-shaped section (1; 11; 21; 31; 41; 51; 61; 71; 81) is used as the anchor element, its foot section (3; 13; 23; 33; 43; 53; 63; 73; 83) running through the part of the recess leading to the enlargement in the foam element, that the T-shaped cross bar (5; 15; 25; 35; 45; 55; 65; 75; 85) engages the enlargement of the recess and that a T-shape is used in which the underside of the cross bar (5; 15; 25; 35; 45; 55; 65; 75; 85) forms an obtuse angle α with it in at least one of its sections adjoining the foot section (3; 13; 23; 33; 43; 53; 63; 73; 83).

2. Method according to claim 1, **characterised in that** a profiled body with a foot section (3; 13; 23; 33; 43; 53; 63; 73; 83) in the form of a flat profile is used as the anchor element.

3. Method according to claim 1 or 2, **characterised in that** a profiled body (1) is used as the anchor element, at which the cross bar (5) of the T-shape is in the form of a flat profile where the two undersides of the cross bar adjoining the foot section (3) are slightly tilted in relation to the foot section (3) and form the obtuse angle α together with it on both sides.

4. Method according to claim 3, **characterised in that** a profiled body is used in which the cross bar (5; 65; 75; 85) of the T-shape is rounded at the ends.

5. Method according to claim 3 or 4, **characterised in that** a profiled body is used in which the foot section (23; 33; 53) extends at an angle in relation to the main direction of the cross bar, so that the obtuse angle α is formed on one side only between the foot section (23; 33; 53) and the underside of the cross bar (25; 35; 55).

6. Method according to one of the claims 1 to 5, **characterised in that** a profiled body (31) is used in which the cross bar (35) is asymmetrical, with curved edges at the end.

7. Method according to one of the claims 1 to 6, **characterised in that** a profiled body (41) is used at which the top side of the cross bar (45) of the T-profile is rounded in the shape of a circular arc and the undersides of the cross bar (45) are slightly curved on both sides of the foot section (43).

## Revendications

1. Procédé pour fabriquer un élément en mousse, en particulier un élément de rembourrage en mousse pour un siège d'automobile ou d'avion, avec lequel on réalise dans l'élément en mousse au moins un évidement qui s'ouvre en direction de sa surface et est prévu pour le logement d'une partie d'ancrage pour un matériau de revêtement, par le fait qu'on dispose dans le moule de moussage formant l'élément en mousse au moins une pièce moulée pouvant être enlevée, qui présente des surfaces moulées qui forment un élargissement dans l'évidemment à distance de la surface de l'élément en mousse, **caractérisé en ce qu'**on utilise comme partie d'ancrage un corps profilé (1 ; 11 ; 21 ; 31 ; 41 ; 51 ; 61 ; 71 ; 81) présentant une section approximativement en forme de T, dont la partie inférieure (3 ; 13 ; 23 ; 33 ; 43 ; 53 ; 63 ; 73 ; 83) traverse la partie, aboutissant à l'élargissement, de l'évidement dans l'élément en mousse, **en ce que** la poutre transversale (5 ; 15 ; 25 ; 35 ; 45 ; 55 ; 65 ; 75 ; 85) du moule en T s'engage dans l'élargissement de l'évidement et **en ce qu'**on utilise un tel moule en T, sur lequel le côté inférieur de la poutre transversale (5 ; 15 ; 25 ; 35 ; 45 ; 55 ; 65 ; 75 ; 85) forme dans au moins une de ses parties contiguës à la partie de base (3 ; 13 ; 23 ; 33 ; 43 ; 53 ; 63 ; 73 ; 83) un angle aigu avec cette partie.

2. Procédé selon la revendication 1, **caractérisé en ce qu'**on utilise comme partie d'ancrage un corps profilé avec une partie de base (3 ; 13 ; 23 ; 33 ; 43 ; 53 ; 63 ; 73 ; 83) conçue comme un profilé plat.

3. Procédé selon la revendication 1 ou 2, **caractérisé en ce qu'**on utilise comme partie d'ancrage un corps profilé (1), sur lequel la poutre transversale (5) du moule en T est conçue comme un profilé plat, sur lequel deux côtés inférieurs, contigus à la partie de base (3) de la poutre transversale sont légèrement inclinés par rapport à la partie de base (3) et forment l'angle aigu α des deux côtés avec cette partie.

4. Procédé selon la revendication 3, **caractérisé en ce qu'**on utilise un corps profilé sur lequel la poutre transversale (5 ; 65 ; 75 ; 85) du moule en T est arrondie côté extrémité.

5. Procédé selon la revendication 3 ou 4, **caractérisé en ce qu'**on utilise un corps profilé, sur lequel la partie de base (23 ; 33 ; 53) est disposée de façon inclinée par rapport à l'étirement principal de la poutre transversale, de sorte que l'angle aigu α est formé uniquement sur un côté entre la partie de base (23 ;33 ;53) et la partie inférieure de la poutre transversale (25 ; 35 ; 55).

6. Procédé selon l'une quelconque des revendications 1 à 5, **caractérisé en ce qu'**on utilise un corps profilé (31) sur lequel la poutre transversale (35) est conçue de façon dissymétrique avec des bords d'extrémité incurvés.

7. Procédé selon l'une quelconque des revendications 1 à 6, **caractérisé en ce qu'**on utilise un corps profilé (41), sur lequel le côté supérieur de la poutre transversale (45) du profilé en T est arrondi en forme d'arc de cercle et les côtés inférieurs de la poutre transversale (45) sont légèrement courbés des deux côtés de la partie de base (43).
